# EUROPÄISCHE PATENTSCHRIFT

(11) **EP 1 556 267 B1**
(45) Veröffentlichungstag und Bekanntmachung des Hinweises auf die Patenterteilung: **13.09.2006**
(21) Anmeldenummer: 03740397.9
(22) Anmeldetag: 01.07.2003
(51) Int. Cl.: B62B 9/12

(54) **KINDERWAGEN MIT ELEKTROMOTORISCH VERSCHWENKBARER RÜCKENLEHNE**
CHILDREN'S CARRIAGE HAVING A BACKREST THAT CAN BE PIVOTED BY AN ELECTRIC MOTOR
VOITURE D'ENFANT A DOSSIER PIVOTANT PAR MOTEUR ELECTRIQUE

(30) Priorität: 28.10.2002 DE 10250190
(43) Veröffentlichungstag der Anmeldung: 27.07.2005
(73) Patentinhaber: HAUCK GmbH & Co. KG, 96242 Sonnefeld (DE)
(72) Erfinder: FEYLER, Jörg, 96242 Sonnefeld (DE)
(74) Vertreter: Schultz-Süchting, Rolf
(86) Internationale Anmeldenummer: PCT/EP2003/007004
(87) Internationale Veröffentlichungsnummer: WO 2004/039653

(56) Entgegenhaltungen:
- DE-A- 10 056 746
- DE-U- 20 220 346
- US-A- 5 257 799

## Beschreibung

Die Erfindung betrifft einen Kinderwagen mit einem Kindersitz gemäß dem oberbegriff des Anspruchs 1, wie zum Beispiel von der DE 10056746 A1 gezeigt.

Derartige Kinderwagen sind allgemein bekannt, wobei sich die vorliegende Erfindung sowohl in Längsrichtung als auch in Richtung quer dazu zusammenfaltbare Kinderwagen erstreckt, insbesondere auch auf Kinderwagen mit zwei parallelen seitlichen Vorderstreben, an denen zwei Hinterstreben in Richtung der Vorderstreben verschwenkbar angelenkt sind, wobei Vorder- und Hinterstreben an ihren unteren Endabschnitten Vorder- und Hinterräder aufweisen, und mit einem zwischen den beiden Vorderstreben angeordneten Kindersitz bestehend aus einer Sitzfläche und dem gegenüber schwenkbaren Rückenlehne, wobei die Vorderstreben an ihren oberen Enden unter Ausbildung eines Schiebers miteinander verbunden sind und in der aufgeklappten Gebrauchsstellung des Kinderwagengestells schräg nach hinten ansteigen, während die Hinterstreben entweder schräg nach vorne ansteigen oder sich im wesentlichen vertikal erstrecken. Auch soll sich die vorliegende Erfindung auf Kinderwagen erstrecken, deren Vorderstreben in einen unteren Fahrgestellteil und oberen Schieberteil geteilt sind, wobei der obere Schieberteil an dem unteren Fahrgestellteil um eine horizontale Schwenkachse verschwenkbar angelenkt ist, so dass der obere Schieberteil von einer Seite hinter der Rückenlehne auf eine Seite vor der Rückenlehne und umgekehrt verschwenkbar ist. Letztgenannter Kinderwagen ist zum Beispiel in der US 5,257,799 dargestellt. Kinderwagen der eingangs genannten Art sind beispielsweise aus der DE 43 28 567 C2 bekannt. Aus dieser Druckschrift ist des weiteren bekannt, einen Antrieb zum Zusammenklappen und Aufstellen des Kinderwagengestells vorzusehen. Dabei handelt es sich entweder um einen mechanischen Kurbelantrieb oder elektromotorischen Antrieb.

Ausgehend von diesem Stand der Technik liegt der vorliegenden Erfindung die Aufgabe zugrunde, den Komfort für den Benutzer eines Kinderwagens zu erhöhen und darüber hinaus darauf zu achten, dass dieser Komfort auch dem Kind selbst zugute kommt.

Diese Aufgabe wird durch die kennzeichnenden Merkmale des Anspruches 1 gelöst, wobei bevorzugte Weiterentwicklungen und Ausführungsformen in den Unteransprüchen beschrieben sind.

Der Kern der vorliegenden Erfindung liegt darin, dass zwischen Sitzfläche und Rückenlehne ein elektromotorischer Schwenkantrieb zur stufenlosen Verstellung der Neigung der Rückenlehne gegenüber der Sitzfläche angeordnet ist, wobei der Schwenkantrieb bei Bedarf überbrückbar bzw. außer Eingriff bringbar ist, so dass die Rückenlehne in herkömmlicher Weise stufenweise relativ zur Sitzfläche verschwenkt und justiert bzw. arretiert werden kann.

Die stufenlose Verstellung der Rückenlehne mittels eines elektromotorischen Antriebs verhindert, dass ein dösendes oder schlafendes Kind durch Verstellung der Neigung der Rückenlehne aufgeweckt wird, die in der Regel sehr abrupt erfolgt. Das in Sitzstellung einnickende Kind kann durch die Erfindung äußerst sanft in Liegeposition gebracht werden. Eine am Schieber angeordnete Betätigungseinrichtung erlaubt bzgl. der Verstellung der Rückenlehne vollkommene Kontrolle über das Kind.

Andererseits ist es manchmal wünschenswert, die Rückenlehne schnell in herkömmlicher Weise in eine vorgegebene Position relativ zur Sitzfläche zu verschwenken, oder bei zusammenfaltbaren Kinderwagen vollständig auf die Sitzfläche zu klappen. Einer derartigen Handhabung stünde der erfindungsgemäße Schwenkantrieb grundsätzlich entgegen, so dass erfindungsgemäß vorgesehen ist, den Schwenkantrieb bei Bedarf zu überbrücken bzw. außer Eingriff zu bringen, so dass die Rückenlehne in herkömmlicher Weise relativ zur Sitzfläche verschwenkt und justiert werden kann. Dementsprechend ist die erfindungsgemäße Konstruktion sehr variabel und erhöht den Komfort sowohl für das Kind als auch den Benutzer.

Vorzugsweise ist der Schwenkantrieb ein Linearantrieb, der an dem der Sitzfläche zugeordneten Rahmen einerseits und am Rahmen der Rückenlehne andererseits angelenkt ist.

Von besonderer Bedeutung sind noch die konstruktiven Maßnahmen nach den Ansprüchen 3 ff., wonach der Spindelantrieb eine Drehspindel einerseits und einen mit dieser korrespondierenden Gewindeabschnitt andererseits umfasst, der bei Bedarf von der Spindel abhebbar ist. Bei einer konkreten Ausführungsform ist der der Spindel zugeordnete Gewindeabschnitt Teil einer in einem Spindelblock senkrecht zur Spindellängsachse verschiebbar gelagerten Gewindebacke. Vorzugsweise ist diese Gewindebacke innerhalb des Spindelblocks gegen die Wirkung eines elastischen Elements, insbesondere einer Schraubendruckfeder von der Spindel abhebbar. Zur Betätigung der Gewindebacke kann ein Bowdenzug vorgesehen sein entsprechend Anspruch 6.

Sofern der Kinderwagen noch eine Fußstütze aufweist, ist es vorteilhaft, auch dieser einen elektromotorischen Antrieb zur Veränderung der Schwenklage gegenüber der Sitzfläche zuzuordnen. Bei Bedarf soll auch dieser Schwenkantrieb überbrückbar bzw. außer Eingriff bringbar sein, so dass die Fußstütze in herkömmlicher Weise verschwenkt und arretiert werden kann.

Den einzelnen Antrieben sind jeweils gesonderte Betätigungseinrichtungen zugeordnet, und zwar vorzugsweise am Schieber. Diesbezüglich wird auf die Ansprüche 10 f. verwiesen.

Nachstehen wird eine Ausführungsform eines erfindungsgemäßen Kinderwagens anhand der beigefügten Zeichnung näher erläutert. Diese zeigt in:
- Figur 1: die relative Zuordnung von Sitzflächenrahmen, Rückenlehnenrahmen und Fußstützenrahmen unter Darstellung elektromotorischer Antriebe für Rückenlehne und Fußstütze in perspektivischer Ansicht;
- Figur 2: die Anordnung gemäß Figur 1 in Seitenansicht;
- Figur 3: die elektromotorischen Antriebe für Rückenlehne und Fußstütze in Seitenansicht und vergrößertem Maßstab;
- Figur 4: einen Teil eines der Rückenlehne zugeordneten Spindel-Schwenkantriebes in perspektivischer Ansicht; und
- Figur 5: das in Figur 4 dargestellte Detail in Explosionsdarstellung.

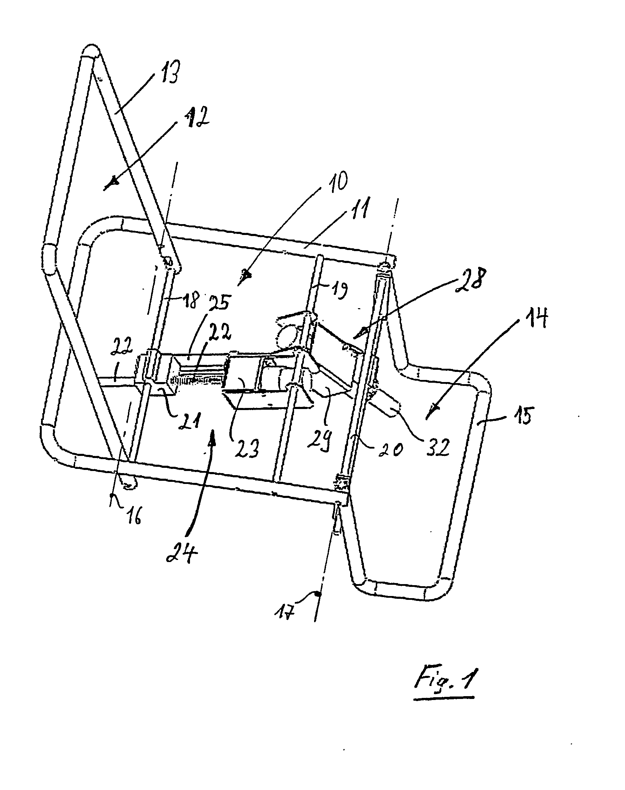

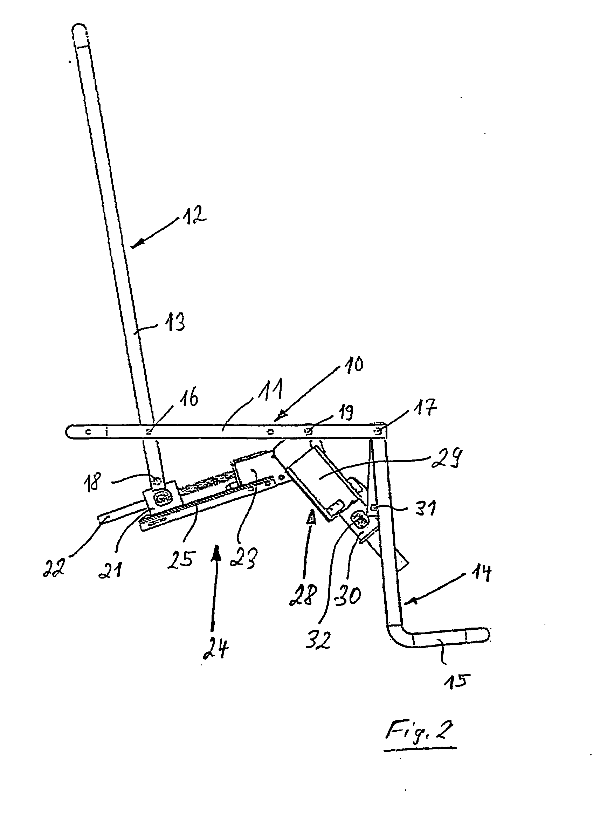

In den Figuren 1 und 2 sind in relativer Zuordnung zueinander ein einer Sitzfläche 10 zugeordneter Rahmen 11, ein einer Rückenlehne 12 zugeordneter Rahmen 13 und ein einer Fußstütze 14 zugeordneter Rahmen 15 dargestellt. Die vorgenannten Rahmen sind jeweils um horizontale Achsen 16 bzw. 17 relativ zueinander verschwenkbar, wobei beim Gebrauch der Sitzflächenrahmen 11 eine etwa horizontale Lage einnimmt und beibehält. Relativ zu dem Sitzflächenrahmen 11 sind um die Achsen 16 bzw. 17 die Rückenlehne 12 bzw. Fußstütze 14 verschwenkbar. Die Rahmen 11 und 13 sind jeweils etwa U-förmig ausgebildet. Konkret handelt es sich um Rohrrahmen. Die beiden Schenkel der U-förmigen Rahmen 11 und 13 sind durch Querstreben 18 bzw. 19 miteinander verbunden. Das gleiche gilt für den Rahmen der Fußstütze 14. Auch dort sind die Enden der beiden Schenkel des U-förmig gebogenen Fußstützen-Rahmens 15 durch eine Querstrebe 20 miteinander verbunden. Diese Querstrebe 20 definiert gleichzeitig die Schwenkachse 17 der Fußstütze 14 gegenüber der Sitzfläche 10.

Die Anlenkung des der Rückenlehne 12 zugeordneten Rahmens 13 an dem der Sitzfläche 10 zugeordneten Rahmen 11 erfolgt so, dass die beiden Schenkel des Rückenlehnen-Rahmens 13 nach unten über die durch den Rahmen 11 aufgespannte Ebene vorstehen, so wie dies Figur 2 sehr gut erkennen lässt. Die freien Enden der nach unten vorstehenden Schenkel des Rahmens 13 sind durch die Querstrebe 18 miteinander verbunden. An dieser Querstrebe 18 ist ein sog. Spindelblock 21 verschwenkbar gelagert, und zwar um die durch die Querstrebe 18 definierte Längsachse. Dieser Spindelblock 21 umfaßt einen Innengewindeabschnitt, der mit einer sich in Kinderwagen-Längsrichtung erstreckenden Gewindespindel 22 zusammenwirkt. Die Gewindespindel 22 wird durch einen Elektromotor 23 drehangetrieben. Der Elektromotor 23 ist um die die beiden Schenkel des der Sitzfläche 10 zugeordneten Rahmens 11 miteinander verbindende Querstrebe 19 verschwenkbar gelagert. Der Elektromotor 23, die Gewindespindel 22 und der der Gewindespindel 22 zugeordnete Spindelblock 21 definieren einen als Linearantrieb ausgebildeten Schwenkantrieb 24 für die Rückenlehne 12.

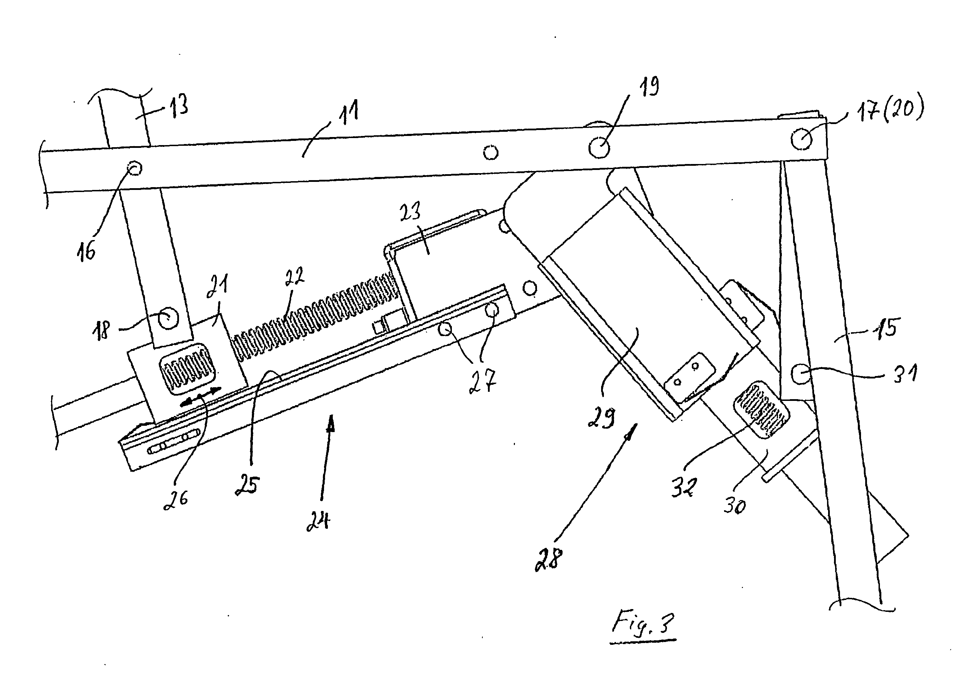

Der Spindelblock 21 ist zum Zwecke einer zwängungsfreien Zusammenwirkung mit der Gewindespindel 22 in Richtung parallel zur Spindel 22 längsverschieblich gelagert. Die entsprechende Längsführung ist in den Figuren 1 bis 3 mit der Bezugsziffer 25 gekennzeichnet. Der Spindelblock 21 ist an der Längsführung 25 in Richtung des Doppelpfeils 26 (Figur 3) hin- und herverschiebbar gelagert, und zwar abhängig von der Drehrichtung der Spindel 22. Die Längsführung 25 ist am Gehäuse des Elektromotors 23 befestigt, und zwar mittels Schrauben 27 (Figur 3).

Die in den Figuren 1 bis 3 dargestellte Ausführungsform eines Kinderwagens umfasst auch noch eine Fußstütze 14 mit zugeordnetem Rahmen 15. Zwischen dem Rahmen 15 der Fußstütze 14 und dem Rahmen 11 der Sitzfläche 10 ist ebenfalls ein elektromotorischer Schwenkantrieb 28 zur Veränderung der Schwenklage der Fußstütze 14 gegenüber der Sitzfläche 10 angeordnet. Auch dieser Schwenkantrieb ist ähnlich wie der Schwenkantrieb 24 als Linearantrieb ausgebildet. Der eine Teil, nämlich der elektromotorische Teil 29 des Schwenkantriebes 28 ist ebenso wie der Elektromotor 23 an der Querstrebe 19 um diese verschwenkbar gelagert, während der andere Teil, nämlich ein Spindelblock 30 am Fußstützen-Rahmen 15 angelenkt ist (Anlenkung 31). Der Spindelblock 30 wirkt ebenso wie der Spindelblock 21 mit einer vom Elektromotor 29 drehangetriebenen Gewindespindel 32 zusammen.

Den beiden Schwenkantrieben 24 und 28 sind jeweils gesonderte Betätigungseinrichtungen zugeordnet, die vorzugsweise am Schieber des Kinderwagens angeordnet sind. Die Betätigungseinrichtung für die einzelnen Antriebe weisen entweder Druckknöpfe oder touch-Felder für eine digitale Ansteuerung oder Drehschalter für eine analoge Ansteuerung auf.

Der Schwenkantrieb 28 der Fußstütze 14 soll bei Bedarf ebenfalls überbrückbar bzw. außer Eingriff bringbar sein, so dass die Fußstütze 14 in herkömmlicher Weise relativ zur Sitzfläche 10 verschwenkt und justiert bzw. arretiert werden kann, wobei dies dann in der Regel stufenweise erfolgt ebenso wie bei dem entsprechenden herkömmlichen Mechanismus für die Rückenlehne 12.

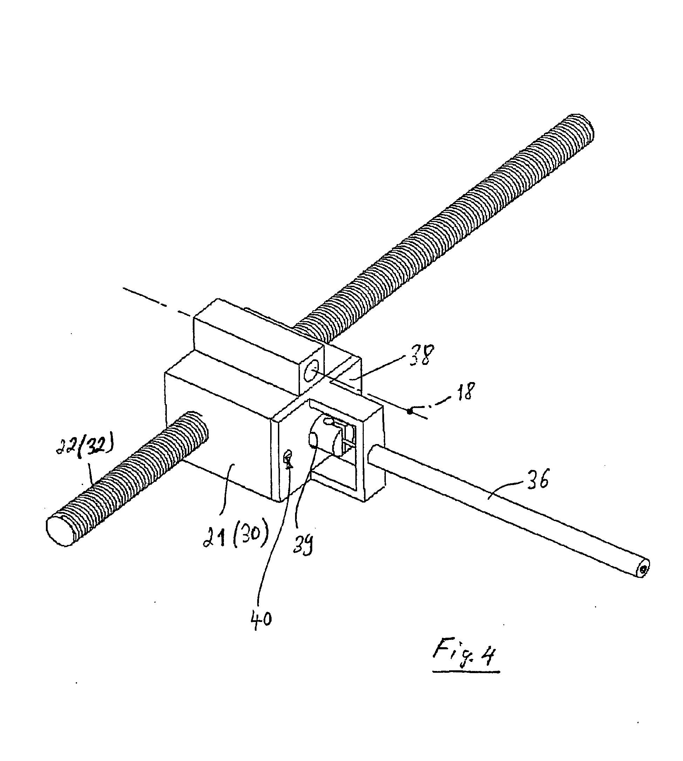

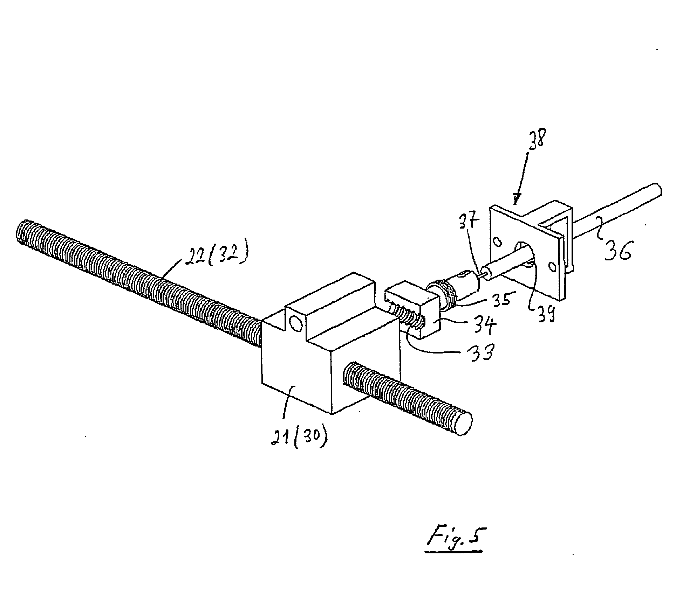

Die vorgenannte Überbrückung des Schwenkantriebes 28 ebenso wie die Überbrückung des Schwenkantriebes 24 ist zum Beispiel mit den Maßnahmen möglich, wie sie anhand der Figuren 4 und 5 dargestellt sind. Wie bereits oben erwähnt, soll der den Gewindespindeln 22 bzw. 32 zugeordnete Spindelblock 21 bzw. 30 einen Innengewindeabschnitt aufweisen, der von der Gewindespindel 22 bzw. 32 abhebbar ist. Zu diesem Zweck ist der der Spindel 22 bzw. 32 zugeordnete Gewindeabschnitt 33 (siehe Figur 5) Teil einer im Spindelblock 21 bzw. 30 senkrecht zur Spindellängsachse verschiebbar gelagerten Gewindebacke 34. Die Gewindebacke 34 ist innerhalb des Spindelblocks 21 bzw. 30 gegen die Wirkung einer Schraubdruckfeder 35 von der Gewindespindel 22 bzw. 32 abhebbar, wobei diese Relativbewegung mittels eines am Spindelblock 21 bzw. 30 abgestützten Bowdenzugs 36 außer Spindeleingriff bringbar ist, wobei ein dem Bowdenzug 36 zugeordneter Betätigungshebel oder -schalter sich vorzugsweise am Schieber des Kinderwagens befindet.

Entsprechend den Figuren 4 und 5 ist die den Innengewindeabschnitt 33 umfassende Backe 34 als T-Element ausgebildet. Am stirnseitigen Ende des Längssteges dieses T-Elements ist ein Drahtseil 37 des Bowdenzugs 36 angeschlossen. Die Schraubendruckfeder 35 stützt sich am Quersteg des T-förmigen Gewindebackens 34 einerseits und an einem Deckel 38 des Spindelblocks 21 bzw. 30 andererseits ab. Der Deckel 38 ist mit einer Durchgangsbohrung 39 für den Längssteg des T-förmigen Gewindebackens 34 versehen. Im übrigen ist der Deckel an der zugeordneten Seite des Spindelblocks 21 bzw. 30 verschraubt (Verschraubung 40).

Der Spindelblock 21 bzw. 30 weist eine Durchgangsbohrung mit einem Innendurchmesser auf, der geringfügig größer ist als der Außendurchmesser der Gewindespindel 22 bzw. 32, so dass die Gewindespindel 22 bzw. 32 sich zwängungsfrei durch den Spindelblock 21 bzw. 30 hindurcherstrecken kann. Die Zusammenwirkung zwischen Spindelblock 21 bzw. 30 einerseits und Gewindespindel 22 bzw. 32 andererseits erfolgt ausschließlich über die Gewindebacke 34 mit Innengewindeabschnitt 33. Sofern die Gewindebacke 34 mit dem Innengewinde 33 von der Gewindespindel 22 bzw. 32 abgehoben wird, d.h. außer Eingriff steht, kann der Spindelblock 21 bzw. 30 relativ zur Gewindespindel 22 bzw. 32 verschoben werden. Dann ist es möglich, die mit dem Spindelblock 21 bzw. 32 verbundene Rückenlehne 12 bzw. Fußstütze 14 manuell gegenüber der Sitzfläche 10 zu verschwenken, und zwar in herkömmlicher Weise, und in einer vorbestimmten Stellung relativ zur Sitzfläche 10 zu arretieren.

### Bezugszeichen

- 10: Sitzfläche
- 11: Sitzflächen-Rahmen
- 12: Rückenlehne
- 13: Rückenlehnen-Rahmen
- 14: Fußstütze
- 15: Fußstützen-Rahmen
- 16: Schwenkachse
- 17: Schwenkachse
- 18: Querstrebe
- 19: Querstrebe
- 20: Querstrebe
- 21: Spindel block
- 22: (Gewinde-)Spindel
- 23: Elektromotor
- 24: Schwenkantrieb
- 25: Längsführung
- 26: Doppelpfeil
- 27: Schrauben
- 28: Schwenkantrieb
- 29: Elektromotor
- 30: Spindelblock
- 31: Anlenkung
- 32: Gewindespindel
- 33: (Innen-)Gewindeabschnitt
- 34: Gewindebacken
- 35: Feder
- 36: Bowdenzug
- 37: Drahtseil
- 38: Deckel
- 39: Durchgangsbohrung
- 40: Verschraubung

## Patentansprüche

1. Kinderwagen mit einem Kindersitz bestehend aus einer Sitzfläche (10) und eine demgegenüber verschwenkbaren Rückenlehne (12), wobei Sitzfläche (10) und Rückenlehne (12) jeweils zugeordnete, relativ zueinander verschwenkbare Rahmen (11 bzw. 13) aufweisen, und wobei
zwischen dem der Sitzfläche (10) zugeordneten Rahmen (11) und dem Rückenlehnen-Rahmen (13) ein elektromotorischer Schwenkantrieb (24) zur stufenlosen Verstellung der Neigung der Rückenlehne (12) gegenüber der Sitzfläche (10) angeordnet ist, **dadurch gekennzeichnet, dass** ein Mechanismus vorgesehen ist, durch den der Schwenkantrieb (24) bei Bedarf überbrückbar bzw. außer Eingriff bringbar ist, so dass die Rückenlehne (12) in herkömmlicher Weise relativ zur Sitzfläche (10) verschwenkt und justiert werden kann.

2. Kinderwagen nach Anspruch 1,
**dadurch gekennzeichnet, dass**
der Schwenkantrieb (24) ein Linearantrieb ist, der an dem der Sitzfläche (10) zugeordneten Rahmen (11) einerseits und am Rahmen (13) der Rückenlehne (12) andererseits angelenkt ist.

3. Kinderwagen nach Anspruch 1 oder 2,
**dadurch gekennzeichnet, dass**
der Schwenkantrieb (24) eine Gewindespindel (22) umfaßt, die mit einem entweder am Rahmen (13) der Rückenlehne (12) oder am der Sitzfläche (10) zugeordneten Rahmen (11) angelenkten Spindelblock (21) zusammenwirkt, wobei der Spindelblock (21) einen mit der Spindel (22) korrespondierenden InnenGewindeabschnitt (33) aufweist.

4. Kinderwagen nach Anspruch 3,
**dadurch gekennzeichnet, dass**
der mit der Spindel (22) korrespondierende Gewindeabschnitt (33) bei Bedarf von der Spindel (22) abhebbar bzw. außer Eingriff bringbar ist.

5. Kinderwagen nach Anspruch 4,
**dadurch gekennzeichnet, dass**
der der Spindel (22) zugeordnete Gewindeabschnitt (33) Teil einer im Spindelblock (21) senkrecht zur Spindellängsachse verschiebbar gelagerten Gewindebacke (34) ist.

6. Kinderwagen nach Anspruch 5,
**dadurch gekennzeichnet, dass**
die Gewindebacke (34) innerhalb des Spindelblocks (21) gegen die Wirkung eines elastischen Elements, insbesondere einer Feder (35) von der Spindel (22) abhebbar ist.

7. Kinderwagen nach Anspruch 5 oder 6,
**dadurch gekennzeichnet, dass**
die Gewindebacke (34) mittels eines am Spindelblock (21) abgestützten Bowdenzugs (36) außer Spindeleingriff bringbar ist, wobei ein dem Bowdenzug (36) zugeordneter Betätigungshebel sich vorzugsweise am Schieber des Kinderwagens befindet.

8. Kinderwagen nach einem der Ansprüche 1 bis 7,
**dadurch gekennzeichnet, dass**
an dem der Sitzfläche (10) zugeordneten Rahmen (11) eine Fußstütze (14) bzw. ein Fußstützen-Rahmen (15) angelenkt ist, der bzw. dem ebenfalls ein elektromotorischer Antrieb (28) zur Veränderung der Schwenklage gegenüber der Sitzfläche (10) zugeordnet ist.

9. Kinderwagen nach Anspruch 8,
**dadurch gekennzeichnet, dass**
der der Fußstütze (14) zugeordnete Schwenkantrieb (28) ein Linear-, insbesondere Spindelantrieb ist, der am Rahmen (15) der Fußstütze (14) einerseits und an dem der Sitzfläche (10) zugeordneten Rahmen (11) andererseits angelenkt ist.

10. Kinderwagen nach Anspruch 8 oder 9,
**dadurch gekennzeichnet, dass**
der Schwenkantrieb (28) der Fußstütze (14) bei Bedarf überbrückbar bzw. außer Eingriff bringbar ist, so dass die Fußstütze (14) in herkömmlicher Weise relativ zur Sitzfläche (10) verschwenkt und justiert bzw. arretiert werden kann.

11. Kinderwagen nach einem der Ansprüche 1 bis 10,
**dadurch gekennzeichnet, dass**
jedem Antrieb (24; 28) eine gesonderte Betätigungseinrichtung am Schieber zugeordnet ist.

## Claims

1. Perambulator with a child's seat consisting of a seating (10) and a back rest (12) that can be swivelled with respect to the seating, the seating (10) and back rest (12) each having allocated frames (11 or 13, respectively) that can be swivelled with respect to each other, and between the frame (11) of the seating (10) and the frame (13) allocated to the back rest an electric motor swivel drive (24) being mounted for the progressive adjustment of the back rest (12) with respect to the seating (10),
**characterized in that**
a mechanism is provided by which the swivel drive (24) can be bridged or removed out of reach, if necessary, so that the back rest (12) can be swivelled and adjusted with respect to the seating (10) in a customary manner.

2. Perambulator according to Claim No. 1, wherein the swivel drive (24) is a linear drive that is linked by hinges to the frame (10) allocated to the seating (10) on the one side and to the frame (13) allocated to the back rest (12) on the other side.

3. Perambulator according to Claim No. 1 or 2, wherein the swivel drive (24) comprises a threaded spindle that acts together with a spindle stand (21) linked by hinges either to the frame (13) of the back rest (12) or to the frame (11) allocated to the seating (10), the spindle stand (21) having an interior thread portion (33) corresponding to the spindle (22).

4. Perambulator according to Claim No. 3, wherein the portion of the thread (33) corresponding to the spindle (22) can be lifted off the spindle (22) or removed out of reach, respectively.

5. Perambulator according to Claim No. 4, wherein the portion of the thread (33) corresponding to the spindle (22) is part of an adjustable screw jaw (34), which has a bearing sliding vertically to the longitudinal axis of the spindle.

6. Perambulator according to Claim No. 5, wherein the adjustable screw jaw (34) can be lifted off the spindle (22) within the spindle stand (21) against the action of an elastic element, in particular a spring (35).

7. Perambulator according to Claim No. 5 or 6, wherein the adjustable screw jaw (34) can be removed out of reach of the spindle by means of a Bowden cable (36) supported by the spindle stand (21), an operating lever allocated to the Bowden cable (36) being located preferably on the handle of the perambulator.

8. Perambulator according to Claim No. 1 to 7, wherein to the frame (11) allocated to the seating (10), a foot rest (14) or a foot rest frame (15), respectively, is linked by hinges which is allocated to an electric motor drive (28) for the adjustment of the swivel angle to the seating (10).

9. Perambulator according to Claim No. 8, wherein the swivel drive (28) allocated to the foot rest (14) is a linear drive, in particular a spindle drive, which is linked by hinges to the frame (15) of the foot rest (14) on the one side and to the frame (11) allocated to the seating (10) on the other side.

10. Perambulator according to Claim No. 8 or 9, wherein the swivel drive (28) of the foot rest (14) can be bridged or removed out of reach, if necessary, so that the foot rest (14) can be swivelled with respect to the seating (10) and adjusted or arrested, respectively, in a customary mariner.

11. Perambulator according to Claim No. 1 to 10, wherein a separate operating device on the handle is allocated to each drive (24, 28).

## Revendications

1. Voiture d'enfant avec un siège d'enfant, composée d'une surface de siège (10) et un dossier (12) en jonction angulaire réglable par un mécanisme pivotant ; la surface de siège (10) et le dossier (12) ayant des cadres (11 ou bien 13) attribués à chacun d'eux ; et un moteur électrique pivotant (24) étant placé entre le cadre (11) attribué à la surface de siège (10) et le cadre du dossier (13) servant au réglage sans intervalles de l'angle entre le dossier (12) et la surface de siège (10),
**caractérisée par le fait**
**qu'**un mécanisme est prévu, par lequel le moteur pivotant (24), suivant les besoins, peut être ponté ou bien tourné en dehors de la portée du bras, de manière que l'angle entre le dossier (12) et la surface de siège (10) puisse être modifié et ajusté ou bien arrêté de façon conventionnelle.

2. Voiture d'enfant selon la revendication 1,
**caractérisée par le fait**
**que** le moteur pivotant (24) est un moteur électrique linéaire, qui est joint par des charnières au cadre (11) attribué à la surface de siège (10) d'une part et au cadre (13) du dossier (12) d'autre part.

3. Voiture d'enfant selon la revendication 1 ou 2,
**caractérisée par le fait que**
le moteur pivotant (24) a une broche filetée (22) qui agit ensemble avec un bloc de broche (21) joint par des charnières au cadre (13) du dossier (12) ou bien au cadre (11) de la surface de siège (10), le bloc de broche (21) ayant un segment intérieur de filetage correspondant à la broche (22).

4. Voiture d'enfant selon la revendication 3,
**caractérisée par le fait**
**que**, suivant les besoins, le segment du filetage (33) correspondant à la broche (22) peut être décollé de la broche (22) ou bien enlevé en dehors de la portée de ia broche.

5. Voiture d'enfant selon la revendication 4,
**caractérisée par le fait**
**que** le segment du filetage (33) correspondant à la broche (22) est une composante d'un coussinet de filière (34) logé dans le bloc de broche (21) de façon perpendiculaire sur l'axe longitudinal de la broche.

6. Voiture d'enfant selon la revendication 5,
**caractérisée par le fait**
**que** le coussinet de filière (34) au dedans du bloc de broche (21) peut être décollé de la broche (22) en agissant en antagonisme sur un élément élastique, notamment un ressort (35).

7. Voiture d'enfant selon la revendication 5 ou 6,
**caractérisée par le fait**
**que** le coussinet de filière (34) peut être enlevé en dehors de la portée de la broche par un câble Bowden (36) supporté par le bloc de broche (21), un levier de manoeuvre attribué au câble Bowden (36) étant monté, de préférence, sur la poignée de la voiture d'enfant.

8. Voiture d'enfant selon la revendication 1 à 7,
**caractérisée par le fait**
**qu'**un repose-pied (14) ou bien le cadre (15) d'un repose-pied est joint par des charnières au cadre (11) attribué à la surface de siège (10), qui aussi a un moteur électrique (28) pour modifier l'angle entre le repose-pied (14) ou bien son cadre (15) et la surface de siège (10).

9. Voiture d'enfant selon la revendication 8,
**caractérisée par le fait**
**que** le moteur pivotant (28) attribué au repose-pied (14) est un moteur linéaire, notamment un moteur à broche, qui est joint par des charnières au cadre (15) du repose-pieds (14) d'une part et au cadre (11) attribué à la surface de siège (10) d'autre part.

10. Voiture d'enfant selon la revendication 8 ou 9,
**caractérisée par le fait**
**que**, suivant les besoins, le moteur pivotant (28) du repose-pieds (14) peut être ponté ou bien tourné en dehors de la portée du bras, de manière que l'angle entre le repose-pieds (14) et la surface de siège (10) puisse être modifié et ajusté ou bien arrêté de façon conventionnelle.

11. Voiture d'enfant selon la revendication 1 à 10,
**caractérisée par le fait**
**qu'**à la poignée de la voiture d'enfant, chaque moteur (24, 28) a son propre dispositif de commande.
